# EUROPÄISCHE PATENTSCHRIFT

(11) **EP 2 021 402 B1**
(45) Veröffentlichungstag und Bekanntmachung des Hinweises auf die Patenterteilung: **08.03.2017**
(21) Anmeldenummer: 07729177.1
(22) Anmeldetag: 15.05.2007
(51) Int. Cl.: C08J 5/00, C08J 5/18, C08L 29/00, C08L 29/04, C08L 67/00

(54) **VERFAHREN ZUR HERSTELLUNG EINER BIOLOGISCH ABBAUBAREN KUNSTSTOFFOLIE UND FOLIE**
METHOD FOR THE PRODUCTION OF A BIODEGRADABLE PLASTIC FILM, AND FILM
PROCÉDÉ DE FABRICATION D'UN FILM PLASTIQUE BIODÉGRADABLE ET FILM CORRESPONDANT

(30) Priorität: 23.05.2006 DE 102006024568
(43) Veröffentlichungstag der Anmeldung: 11.02.2009
(73) Patentinhaber: Infiana Germany GmbH & Co. KG, 91301 Forchheim (DE)
(72) Erfinder: BAUER, Michael, 91301 Forchheim (DE); MAUSER, Karl, 91359 Leutenbach (DE); KELM, Roland, 91301 Forchheim (DE); STARK, Kurt, 91284 Neuhaus / Peg. (DE); SCHUHMANN, Michael, Dipl.-Ing., 90613 Grosshabersdorf (DE)
(74) Vertreter: Kutzenberger, Helga
(86) Internationale Anmeldenummer: PCT/EP2007/054729
(87) Internationale Veröffentlichungsnummer: WO 2007/135037

(56) Entgegenhaltungen:
- WO-A-93/00399
- WO-A-98/29506
- WO-A-99/06456
- WO-A-02/053610
- US-A- 5 200 247
- US-A- 5 773 562
- US-A- 5 952 433
- US-A- 6 075 118

## Beschreibung

Die Erfindung bezieht sich auf ein Verfahren zur Herstellung einer biologisch abbaubaren Kunststoffolie bzw. eines Folienverbundes mit Barriereeigenschaften, sowie die nach diesem Verfahren hergestellte Folie.

Aus dem Stand der Technik ist eine Vielzahl biologisch abbaubarer Kunststoffolien bekannt, die jedoch alle den Nachteil aufweisen, für die Verpackung empfindlicher Waren nur bedingt geeignet zu sein.

Desweiteren sind aus dem Stand der Technik Folien und Folienverbunde bekannt, die Barriereeigenschaften aufweisen und dadurch besonders gut zum Verpacken von zum Beispiel auf Sauerstoff empfindlicher Gegenstände geeignet sind. Diese Folien und Folienverbunde sind jedoch nicht biologisch abbaubar oder nur in sehr aufwendigen, mehrschrittigen Verfahren herstellbar.

WO 02/053610 beschreibt unter Einfluss von Wasser biologisch abbaubare Polymerzusammensetzungen enthaltend ein biologisch abbaubares Polymer ausgewählt aus der Gruppe Polyhydroxyalkanoate, Polyalkylensuccinate, Polylactone und deren Mischungen, auf die ein polares Monomer, Oligomer, Polymer oder Mischungen davon aufgepfropft wurden, wobei als ein polares Monomer Maleinsäureanhydrid genannt wird.

WO 93/00399 beschreibt ein wegwerfbares Hygieneprodukt umfassend eine flüssigkeitsdurchlässige Deckschicht, eine flüssigkeitsundurchlässige Rückseitenschicht und einen flüssigkeitsabsorbierenden Kern zwischen Deckschicht und Rückseitenschicht, wobei die flüssigkeitsundurchlässige Rückseitenschicht eine flexible, bioabbaubare Folie enthaltend ein interpenetrierendes Netzwerk aus destrukturierter Stärke mit Ethylen/Acrylsäure- oder Ethylen/Vinylalkohol-Copolymeren und einem bioabbaubaren aliphatischen Polyester, beispielsweise Polylactid, umfasst.

US 5,773,562 beschreibt eine halbkristalline Polylactid-Folie mit einer netto Schmelzendothermie größer 10 J/g enthaltend eine schmelzstabile Lactidpolymer-Zusammensetzung aus einer Vielzahl aus Polylactid-Polymerketten, die weniger als 15 Gew. % meso-Lactid und mindestens 85 % L- oder D-Lactid Isomer enthalten. Die Folie kann u.a. als Verpackungsfolie verwendet werden.

US 5,200,247 beschreibt eine wasserundurchlässige, bioabbaubare, thermoplastische Folie aus einem Blend aus einem Alkanoylpolymer und Polyvinylalkohol.

WO 99/29506, US 6,075,118, WO 98/29506 und US 5,952,433 beschreiben wasserempfindliche und bioabbaubare Blends, Folien und Fasern, die Polyvinylalkohol und Polylactid enthalten und z.B. zur Herstellung von spülbaren Hygieneprodukten verwendet werden können. Dabei lässt sich die Wasserempfindlichkeit über das Verhältnis von Polyvinylalkohol und Polylactid im eingesetzten Blend steuern. Vorzugsweise ist das eingesetzte Polylactid mit einem aufgepfropften polaren Monomer, insbesondere einem ethylenisch ungesättigten Monomer mit polaren Gruppen modifiziert.

Aufgabe der vorliegenden Erfindung ist es ein Verfahren und eine Kunststoffolie bzw. einen Folienverbund vorzuschlagen, der einerseits biologisch abbaubar ist und andererseits gute Barriereeigenschaften gegenüber zum Beispiel Sauerstoff aufweist.

Diese Aufgabe wird erfindungsgemäß dadurch gelöst, daß die Folie bzw. der Folienverbund zumindest aus einem biologisch abbaubaren Basis-Kunststoffmaterial und einem Barriereeigenschaften gegenüber Gasen aufweisenden zweiten Kunststoffmaterial hergestellt wird.

Hierdurch werden gute Barriereeigenschaften mit der biologischen Abbaubarkeit kombiniert.

Die Kunststoffmaterialien werden jeweils zu Folienlagen extrudiert und zusammengefügt.

Dabei ist es sehr vorteilhaft, wenn die Kunststoffmaterialien gemeinsam coextrudiert werden.

Hierdurch wird eine sehr gute Barriere Wirkung erzielt. Der Aufwand zur Erzeugung der Schichten wird durch die gemeinsame Coextrusion der Schichten erheblich reduziert.

Dabei wird zwischen jeweils zwei Folienlagen ein Haftvermittler eingebracht.

Dabei kann der Haftvermittler zusammen mit wenigstens einer der beiden Folienlagen coextrudiert werden.

Es ist erfindungsgemäß aber auch sehr vorteilhaft, wenn der Haftvermittler auf eine der Folienlagen aufgebracht, insbesondere aufextrudiert wird.

Dadurch kann der Haftvermittler gezielt und eventuell auch nicht vollflächig aufgebracht werden.

Eine weitere sehr vorteilhafte Ausgestaltung des erfindungsgemäßen Verfahrens liegt auch dann vor, wenn das Basis-Kunststoffmaterial mit einem weiteren Kunststoffmaterial versetzt wird um die Verträglichkeit mit dem Barrierematerial zu erhöhen.

Damit lassen sich auch eigentlich unverträgliche Kunststoffmaterialien miteinander verträglich verbinden.

Es hat sich dabei auch als äußerst vorteilhaft erwiesen, wenn das Basis-Kunststoffmaterial mit einem Anteil des Barrierematerials vermischt wird.

Eine ebenfalls sehr vorteilhafte Weiterbildung der Erfindung liegt auch dann vor, wenn das Barrierematerial mit einem weiteren Kunststoffmaterial versetzt wird um die Verträglichkeit mit dem Basismaterial zu erhöhen.

Dabei ist es äußerst vorteilhaft, wenn das Barrierematerial mit einem Anteil des Basis-Kunststoffmaterials vermischt wird.

Hierdurch wird die Verträglichkeit des Barrierematerials mit weiteren Kunststoffschichten erheblich verbessert.

Es hat sich erfindungsgemäß auch als sehr vorteilhaft erwiesen, wenn die fertige Folie thermisch verformt, insbesondere tiefgezogen wird.

Damit lässt sich die erfindungsgemäße Folie äußerst vielseitig einsetzen.

Äußerst vorteilhaft ist es auch, wenn ein biologisch abbaubares Barrierematerial eingesetzt wird.

Damit wird die biologische Abbaubarkeit der gesamten Folie nicht beeinträchtigt.

Bei einer nach dem erfindungsgemäßen Verfahren hergestellten biologisch abbaubaren Kunststoffolie wird als Basis-Kunststoffmaterial ein PLA eingesetzt.

Sehr vorteilhaft ist es erfindungsgemäß auch, wenn als zusätzliches Kunststoffmaterial ein Polyvinylalkohol (PVOH) vorgesehen ist.

Polyvinylalkohole haben sich als sehr gute Barrierematerialien erwiesen. Zur Modifizierung von Kunststoffmaterialien lässt sich aber auch PVOH sehr gut einsetzen.

Dabei hat es sich auch als äußerst vorteilhaft erwiesen, wenn ein modifizierter PVOH vorgesehen ist.

Damit lassen sich die bereits sehr guten Eigenschaften nochmals verbessern.

Eine weitere sehr vorteilhafte Ausgestaltung der Erfindung liegt auch dann vor, wenn ein ethylenhaltiger Vinylalkohol (EVOH) als zusätzliches Kunststoffmaterial vorgesehen ist.

EVOH weist nochmals verbesserte Eigenschaften auf.

Dabei hat es sich auch als sehr vorteilhaft erwiesen, wenn ein modifizierter EVOH vorgesehen ist.

Modifizierte EVOHs lassen sich besonders gut mit anderen Kunststoffmaterialien verbinden.

Es hat sich gemäß einer weiteren Ausgestaltung der Erfindung auch als äußerst vorteilhaft erwiesen, wenn ein Barriereeigenschaften aufweisender weiterer Zusatzstoff, insbesondere ein biologisch abbaubarer Zusatzstoff vorgesehen ist.

Hierdurch wird die biologische Abbaubarkeit des gesamten Folienaufbaus nicht negativ beeinflusst.

Eine weitere sehr vorteilhafte Ausgestaltung der Erfindung liegt auch darin, daß ein Blend aus PVOH, modifiziertem PVOH, EVOH, modifiziertem EVOH und/oder weiteren Zusatzstoffen zur Herstellung der biologisch abbaubaren Kunststoffolie vorgesehen ist.

Hierdurch lässt sich einerseits eine sehr gute Verträglichkeit der unterschiedlichen Komponenten herstellen und andererseits lassen sich sehr gute Barriereeigenschaften erzeugen. Besonders wenn ein Blend aus PVOH, modifiziertem PVOH, EVOH und modifiziertem EVOH eingesetzt wird, ergeben sich hervorragende Eigenschaften.

Eine weitere sehr vorteilhafte Ausgestaltung der Erfindung liegt auch dann vor, wenn dem Basis-Kunststoffmaterial bis zu 50%, insbesondere bis zu 30%, vorzugsweise bis zu 10% das zusätzliche Kunststoffmaterial zugefügt ist.

Damit wird eine besonders gute Verträglichkeit zwischen der aus dem Basis-Kunststoffmaterial gefertigten Schicht und der nächsten Schicht erzeugt.

Ebenfalls sehr vorteilhaft ist es, wenn dem zusätzlichen Kunststoffmaterial bis zu 50% Basis-Kunststoffmaterial, insbesondere bis zu 30%, vorzugsweise bis zu 10% beigemengt ist.

Damit wird eine besonders gute Verträglichkeit zwischen der aus dem zusätzlichen Kunststoffmaterial gefertigten Schicht und der aus dem Basis-Kunststoffmaterial gefertigten Schicht erzeugt.

Erfindungsgemäß ist ein Haftvermittler auf Acrylatbasis, insbesondere auf Methacrylat-Basis vorgesehen.

Eine weitere sehr vorteilhafte Ausgestaltung der Erfindung liegt auch darin, daß als Haftvermittler ein Ethylenacrylat vorgesehen ist.

Durch all diese Haftvermittler wird eine besonders gute Haftung und Verträglichkeit zwischen den unterschiedlichen Materialien erzielt.

Dabei sind erfindungsgemäß die Haftvermittler mit Maleinsäureanhydrid modifiziert.

Mit Maleinsäureanhydrid modifizierte Haftvermittler haben sich als für die erfindungsgemäßen Kunststoffe als besonders geeignet erwiesen.

Sehr vorteilhaft ist es desweiteren, wenn der Haftvermittler mit einem weiteren Kunststoffmaterial geblendet ist.

Hierdurch ergeben sich ebenfalls sehr gute Haft- und Verträglichkeitseigenschaften.

Eine weitere äußerst vorteilhafte Ausgestaltung der Erfindung liegt auch dann vor, wenn der Haftvermittler mit dem Basismaterial und/oder dem Barrierematerial geblendet ist.

Dadurch wird die jeweilige Verträglichkeit nochmals verbessert.

Gemäß der Erfindung ist die Folie aus wenigstens einer Folienschicht aufgebaut, die Barriereeigenschaften gegenüber Gasen, insbesondere gegenüber Sauerstoff aufweist.

Dadurch wird es ermöglicht, die erfindungsgemäße Folie auch zum Verpacken von insbesondere gegenüber Sauerstoff empfindlichen Gütern einzusetzen.

Erfindungsgemäß ist die Folie aus wenigstens zwei Folienschichten aufgebaut.

Es hat sich erfindungsgemäß auch als sehr vorteilhaft erwiesen, wenn zwischen zwei aufeinanderfolgenden Folienschichten ein Haftvermittler vorgesehen ist.

Durch diesen Haftvermittler werden die Folienschichten besonders gut miteinander verbunden.

Sehr vorteilhaft ist es erfindungsgemäß auch, wenn die einzelnen Folienschichten modifiziert sind.

Durch die Modifizierung werden die Eigenschaften der jeweiligen Folienschicht definiert verändert.

Es hat sich dabei als sehr vorteilhaft erwiesen, wenn die einzelnen Folienschichten mit dem Material der darauffolgenden Folienschicht geblendet sind.

Damit wird eine besonders gute Verträglichkeit der aufeinander folgenden Folienschichten sichergestellt.

Erfindungsgemäß hat es sich auch als äußerst vorteilhaft erwiesen, wenn die Folie gereckt ist.

Dadurch wird nicht nur die Dicke der Gesamtfolie signifikant reduziert, sondern es werden auch die physikalischen und/oder chemischen Eigenschaften verändert.

Es hat sich auch als sehr vorteilhaft erwiesen, wenn die Folie transparent ausgebildet ist.

Es hat sich aber auch als sehr vorteilhaft erwiesen, wenn die Folie opak ausgebildet ist.

Hierdurch ist die erfindungsgemäße Folie besonders gut für viele Verpackungszwecke geeignet.

Äußerst vorteilhaft ist es erfindungsgemäß auch, wenn das Barrierematerial biologisch abbaubar ist.

Damit wird die biologische Abbaubarkeit der gesamten Folie auch bei größeren Anteilen Barrierematerials nicht negativ beeinflusst.

Im folgenden wird die Erfindung anhand eines Ausführungsbeispiels veranschaulicht.

Eine aus einem PLA bestehende Grundfolie wird mit einem PVOH bzw. einem EVOH, das einen Ethylenanteil von 0,01 bis 80 mol % aufweisen kann, zusammen extrudiert. PLA, PVOH und EVOH sind biologisch abbaubar. PLA basiert zudem auf nachwachsenden Rohstoffen.

Dabei wird das PLA mit dem PVOH bzw. dem EVOH in getrennten Schichten coextrudiert. Es wird eine sehr gute
Barriere Wirkung vor allem gegenüber Sauerstoff erzielt, ohne die biologische Abbaubarkeit des PLA negativ zu beeinflussen.

Um den Zusammenhalt des aus mehreren Schichten bestehenden Folienverbundes zu erhöhen und etwaige Unverträglichkeiten der einzelnen Schichten zu eliminieren wird ein Haftvermittler eingesetzt.

Es ist denkbar, daß um die Verträglichkeit der eigentlich unverträglichen Stoffe diese jeweils mit einem geringen Anteil des jeweils anderen Stoffes geblendet werden, so daß auch hierdurch die Verträglichkeit verbessert und die Haftung der einzelnen Schichten aneinander erhöht wird. Der geringe Anteil kann dabei bis etwa 10% betragen.

Zudem ist es denkbar, daß einem Haftvermittler ebenfalls wenigstens einer der Rohstoffe der jeweils angrenzenden Schichten zugemischt wird. Auch hier wird die Wirkungsweise des Haftvermittlers, unterstützt. Eventuell auftretende, minimale Unverträglichkeiten werden eliminiert.

Erfindungsgemäß werden vor allem Haftvermittler auf Basis von Acrylat und Methacrylat eingesetzt, die mit Maleinsäureanhydrid gepfropft sind.

Diese Haftvermittler können auch, wie oben schon angedeutet noch mit den Rohstoffen der einzelnen Kunststoffschichten geblendet werden, so daß ihre Funktion als Haftvermittler nochmals verbessert wird.

Als Barrierematerial können auch andere für den jeweiligen Einsatzzweck geeignete Barrierematerialien eingesetzt werden, die ebenfalls biologisch abbaubar sein sollten.

Die im Extrusionsverfahren bzw. Coextrusionsverfahren, hierbei bieten sich das Cast und Blasverfahren an, hergestellten Folien können anschließend noch gereckt werden, um einerseits die Schichtdicke zu reduzieren und andererseits unter anderem auch die mechanischen und optischen Eigenschaften zu verändern.

Je nach Einsatzzweck der Folie kann dabei mit monoaxialen und biaxialen Reckungen mit verschiedensten Reckverhältnissen gearbeitet werden.

Auch kann die Folie während der Extrusion oder im Rahmen einer Nachbehandlung mit weiteren Schichten zusammengebracht werden.

Es ist dabei denkbar, daß auch nachträglich noch Beschichtungen aufgebracht werden können. Vor allem können Lacke, insbesondere Siegel- oder Hitzeschutzlacke aber auch Antifog- Additive, Peel- Additive, Antiblockmittel, optische Aufheller, Antistatika Gleitmittel oder Weichmacher, aber auch normale Druckfarben aufgebracht werden.

Genauso ist es auch denkbar, daß Antifog-Additive, Peel-Additive, Antiblockmittel, optische Aufheller, Antistatika Gleitmittel, Weichmacher und/oder Farbstoffe einem der Kunststoffmaterialien, also dem Basismaterial und/oder dem Barrierematerial und/oder einem zusätzlichen Kunststoffmaterial zugesetzt werden. Diese Additive können dabei durch einen Masterbatch oder durch direkte Zugabe während der Extrusion eingebracht werden, wodurch eine sehr homogene Verteilung erzielt werden kann.

Ebenso ist es denkbar, daß die erfindungsgemäßen Folienschichten als Monofolien hergestellt werden und erst anschließend im Kaschierverfahren zusammengefügt werden. Dabei kann dann beispielsweise ein Ein- oder Mehrkomponenten Kaschierkleber eingesetzt werden.

Die gesamte Folie kann nach heutigem Kenntnisstand aus 2 bis 12 Einzelschichten gefertigt werden, wobei auch Monofolien oder auch mehrschichtige Verbünde denkbar sind, die weit mehr Schichten aufweisen.

Die Dicke des erfindungsgemäßen Folienverbundes liegt oftmals zwischen 5 und 5000µm, in den allermeisten Fällen aber zwischen 20 und 2000 µm.

Die erfindungsgemäßen Folien bzw. Folienverbunde sind besonders für Lebensmittelverpackungen geeignet. Es können unter anderem daraus Deckelfolien aber auch tiefziehbare Bodenfolien hergestellt werden.

Versuche haben ergeben, daß die Barriereeigenschaften der erfindungsgemäßen Folie hervorragend ausgebildet sind.

Zur Verdeutlichung der Versuchsergebnisse wurde zunächst eine PLA Monofolie mit einer Dicke von 40µm im Blasverfahren hergestellt. Diese Folie weist eine Sauerstoffdurchlässigkeit von 456 ccm/qm in 24h bei 23°C und 75% Luftfeuchtigkeit auf.

Als nächstes wurde eine aus drei PLA Schichten bestehende Monofolie hergestellt, deren einzelnen Schichten eine Dicke von 10µm, 20µm und 10µm aufweisen. Diese Folie weist dieselbe Sauerstoffdurchlässigkeit wie die oben beschriebene Monofolie auf.

### Beispiel 1 :

Daraufhin wurde mit einem 5-Schicht Blasextruder eine PLA-PVOH-PLA Folie mit einer Gesamtdicke von wiederum 40µm erzeugt. Als erste Aussenschicht wurde eine 10µm PLA Schicht, gefolgt von einer 5µm Haftvermittlerschicht angeordnet. Darauf folgt eine 10µm PVOH Schicht, dann wiederum 5µm Haftvermittler und als zweite Aussenschicht eine 10µm PLA Schicht. Diese Folie weist eine Sauerstoffdurchlässigkeit von 58 ccm / qm in 24h bei 23°C und 75% Luftfeuchte auf und besitzt damit schon sehr gute Barriereeigenschaften gegenüber Sauerstoff

### Beispiel 2:

Hier wurde wiederum eine 5-Schicht Folie auf einem entsprechenden Blasextruder analog zu Beispiel 1 erzeugt. Allerdings wurde die PVOH Schicht durch eine EVOH Schicht ersetzt. Die Messung dieser Folie ergab nun für die Sauerstoffdurchlässigkeit 1,6 ccm / qm in 24h bei 23°C und 75% Luftfeuchte. Damit besitzt diese Folie hervorragende Barriereeigenschaften.

## Patentansprüche

1. Eine biologisch abbaubare Kunststofffolie, **dadurch gekennzeichnet, dass** die Folie aus wenigstens zwei Folienschichten aufgebaut ist, wovon eine Folienschicht Barriereeigenschaften gegenüber Gasen, insbesondere gegenüber Sauerstoff, aufweist und eine Folienschicht aus PLA (Polylactid) als ein biologisch abbaubares Kunststoff-Basismaterial aufgebaut ist und wobei zwischen jeweils zwei Folienschichten ein Haftvermittler auf Acrylat-Basis, insbesondere auf Methacrylat-Basis eingebracht ist, der mit Maleinsäureanhydrid modifiziert ist.

2. Eine biologisch abbaubare Kunststofffolie nach Anspruch 1, **dadurch gekennzeichnet, dass** die Schicht aus biologisch abbaubarem Kunststoff-Basismaterial eine PLA (Polylactid)-Schicht und die Schicht mit Barriereeigenschaften gegen Gase eine Schicht aus Polyvinylalkohol (PVOH), modifiziertem PVOH, ethylenhaltigem Vinylalkohol (EVOH) oder modifiziertem EVOH ist.

3. Eine biologisch abbaubare Kunststofffolie nach Anspruch 1 oder 2, **dadurch gekennzeichnet, dass** als Haftvermittler ein Haftvermittler auf Basis von Ethylenacrylat vorliegt, das mit Maleinsäureanhydrid modifiziert ist.

4. Eine biologisch abbaubare Kunststofffolie nach einem der Ansprüche 1 bis 3, **dadurch gekennzeichnet, dass** die einzelnen Folienschichten modifiziert sind, wobei die einzelnen Folienschichten mit einem Material der darauffolgenden Folienschicht geblendet sein können.

5. Eine biologisch abbaubare Kunststofffolie nach einem der Ansprüche 1 bis 4, **dadurch gekennzeichnet, dass** das Barriereeigenschaften aufweisende Kunststoffmaterial mit einem Anteil des Basis-Kunststoffmaterials vermischt ist.

6. Eine biologisch abbaubare Kunststofffolie nach einem der Ansprüche 1 bis 5, **dadurch gekennzeichnet, dass** dem Barriereeigenschaften aufweisenden Kunststoffmaterial bis zu 50 % Basis-Kunststoffmaterial, vorzugsweise bis zu 30 %, ganz besonders bevorzugt bis zu 10 %, beigemengt ist.

7. Eine biologisch abbaubare Kunststofffolie nach einem der Ansprüche 1 bis 4, **dadurch gekennzeichnet, dass** das Basis-Kunststoffmaterial mit einem Anteil des Barriereeigenschaften aufweisenden Kunststoff-Materials vermischt ist.

8. Eine biologisch abbaubare Kunststofffolie nach einem der Ansprüche 1 bis 4 und 7, **dadurch gekennzeichnet, dass** das Basis-Kunststoffmaterial mit bis zu 50 %, vorzugsweise mit bis zu 30 %, ganz besonders bevorzugt mit bis zu 10 %, mit einem zusätzlichen Kunststoffmaterial geblendet ist.

9. Eine biologisch abbaubare Kunststofffolie nach einem der Ansprüche 1 bis 8, **dadurch gekennzeichnet, dass** das Barriereeigenschaften aufweisende Kunststoffmaterial biologisch abbaubar ist.

10. Eine biologisch abbaubare Kunststofffolie nach einem der Ansprüche 1 bis 9, **dadurch gekennzeichnet, dass** der Haftvermittler mit dem Basismaterial und/oder dem Kunststoffmaterial mit Barriereeigenschaften geblendet ist.

11. Eine biologisch abbaubare Kunststofffolie nach einem der Ansprüche 1 bis 10, **dadurch gekennzeichnet, dass** die biologisch abbaubare Kunststofffolie thermisch verformt, vorzugsweise tiefgezogen, oder gereckt ist.

12. Eine biologisch abbaubare Kunststofffolie nach einem der Ansprüche 1 bis 11, **dadurch gekennzeichnet, dass** die Folie transparent oder opak ist.

13. Ein Verfahren zur Herstellung einer biologisch abbaubaren Kunststofffolie mit wenigstens zwei Folienschichten nach einem der Ansprüche 1 bis 12, **dadurch gekennzeichnet, dass** eine Schicht aus PLA als ein biologisch abbaubares Kunststoff-Basismaterial und eine Schicht mit Barriereeigenschaften gegen Gase extrudiert und zwischen jeweils zwei Folienlagen ein Haftvermittler auf Acrylatbasis, insbesondere auf Methacrylat-Basis eingebracht wird, der mit Maleinsäureanhydrid modifiziert ist, wobei der Haftvermittler zusammen mit wenigstens einer der beiden Folienlagen coextrudiert oder auf eine der Folienlagen aufgebracht, vorzugsweise coextrudiert, worden ist.

14. Ein Verfahren nach Anspruch 13, **dadurch gekennzeichnet, dass** das Basis-Kunststoffmaterial PLA mit einem Barriereeigenschaften aufweisenden zusätzlichen Kunststoffmaterial aus Polyvinylalkohol, modifiziertem PVOH, einem ethylenhaltigen Vinylalkohol oder einem modifizierten EVOH vermischt worden ist.

15. Ein Verfahren nach Anspruch 13 oder 14, **dadurch gekennzeichnet, dass** das Kunststoffmaterial mit Barriereeigenschaften mit einem Anteil des Basis-Kunststoffmaterials vermischt worden ist.

16. Ein Verfahren nach einem der Ansprüche 13 bis 15, **dadurch gekennzeichnet, dass** als Haftvermittler ein Haftvermittler auf Basis von Ethylenacrylat, das mit Maleinsäureanhydrid modifiziert ist, eingesetzt wird.

17. Eine Verwendung einer biologisch abbaubaren Kunststofffolie nach einem der Ansprüche 1 bis 12 zur Verpackung von Lebensmitteln.

## Claims

1. A biodegradable polymeric film **characterized in that** the film is made of at least two film layers, of which one film layer has barrier properties with respect to gases, more particularly with respect to oxygen, and one film layer is based on PLA (polylactide) as a biodegradable polymeric base material and between each of two film layers an adhesion promoter based on acrylate, more particularly on methacrylate, which is modified with maleic anhydride, is arranged.

2. A biodegradable polymeric film according to Claim 1, **characterized in that** the layer of biodegradable polymeric base material is a PLA (polylactide) layer and the layer having barrier properties against gases is a layer of polyvinyl alcohol (PVOH), modified PVOH, ethylene-containing vinyl alcohol (EVOH) or modified EVOH.

3. A biodegradable polymeric film according to Claim 1 or 2, **characterized in that** said adhesion promoter is an adhesion promoter based on ethylene acrylate which is modified with maleic anhydride.

4. A biodegradable polymeric film according to any of Claims 1 to 3, **characterized in that** the individual film layers are modified, whereby the individual film layers could be blended with a material of the subsequent film layer.

5. A biodegradable polymeric film according to any of Claims 1 to 4, **characterized in that** the polymeric material having barrier properties is mixed with a fraction of the polymeric base material.

6. A biodegradable polymeric film according to any of Claims 1 to 5, **characterized in that** the polymeric material having barrier properties is admixed with up to 50% of polymeric base material, preferably up to 30%, more preferably up to 10%.

7. A biodegradable polymeric film according to any of Claims 1 to 4, **characterized in that** the polymeric base material is mixed with a fraction of the polymeric material having barrier properties.

8. A biodegradable polymeric film according to any of Claims 1 to 4 and 7, **characterized in that** the polymeric base material is blended with up to 50%, preferably with up to 30%, very preferably with up to 10%, with an additional polymeric material.

9. A biodegradable polymeric film according to any of Claims 1 to 8, **characterized in that** the polymeric material having barrier properties is biodegradable.

10. A biodegradable polymeric film according to any of Claims 1 to 9, **characterized in that** the adhesion promoter is blended with the base material and/or with the polymeric material having barrier properties.

11. A biodegradable polymeric film according to any of Claims 1 to 10, **characterized in that** the biodegradable polymeric film is thermoformed, preferably deep drawn or orientated.

12. A biodegradable polymeric film according to any of Claims 1 to 11, **characterized in that** the film is transparent or opaque.

13. A method for producing a biodegradable polymeric film having at least two film layers according to any of Claims 1 to 12, **characterized in that** the layer of PLA as the biodegradable polymeric base material and the layer having barrier properties against gases; are extruded and an acrylate-based, more particularly methacrylate-based adhesion promoter is arranged between each of two film layers, the adhesion promoter being modified with maleic anhydride and having been coextruded together with at least one of the two film layers or having been applied, preferably coextruded, onto one of the film layers.

14. A method according to Claim 13, **characterized in that** the polymeric base material PLA has been mixed with a further polymeric material having barrier properties and is based on polyvinyl alcohol, modified PVOH, an ethylene-containing vinyl alcohol or a modified EVOH.

15. A method according to Claim 13. or 14, **characterized in that** the polymeric material having barrier properties has been blended with a fraction of the polymeric base material.

16. A method according to any of Claims 13 to 15, **characterized in that** said adhesion promoter is an adhesion promoter based on ethylene acrylate modified with maleic anhydride.

17. The use of a biodegradable polymeric film according to any of Claims 1 to 12 for packaging foods.

## Revendications

1. Film en matière plastique biologiquement dégradable, **caractérisé en ce que** le film est constitué d'au moins deux couches de film, dont une couche de film présente des propriétés de barrière aux gaz, en particulier à l'oxygène, et une couche de film est constituée de PLA (polylactide) en tant qu'un matériau de base en matière plastique biologiquement dégradable et entre chaque fois deux couches de film est inséré un agent d'adhérence à base d'acrylate, en particulier à base de méthacrylate, qui est modifié avec de l'anhydride maléique.

2. Film en matière plastique biologiquement dégradable selon la revendication 1, **caractérisé en ce que** la couche de matériau de base en matière plastique biologiquement dégradable est une couche de PLA (polylactide) et la couche à propriétés de barrière aux gaz est une couche de poly(alcool vinylique) (PVOH), de PVOH modifié, d'alcool vinylique contenant de l'éthylène (EVOH) ou d'EVOH modifié.

3. Film en matière plastique biologiquement dégradable selon la revendication 1 ou 2, **caractérisé en ce qu'**en tant qu'agent d'adhérence est présent un agent d'adhérence à base d'éthylène-acrylate, qui est modifié avec de l'anhydride maléfique.

4. Film en matière plastique biologiquement dégradable selon l'une quelconque des revendications 1 à 3, **caractérisé en ce que** les couches de film individuelles sont modifiées, les couches de film individuelles pouvant être mélangées avec un matériau de la couche de film suivante.

5. Film en matière plastique biologiquement dégradable selon l'une quelconque des revendications 1 à 4, **caractérisé en ce que** le matériau en matière plastique présentant des propriétés de barrière est mélangé avec une proportion du matériau en matière plastique de base.

6. Film en matière plastique biologiquement dégradable selon l'une quelconque des revendications 1 à 5, **caractérisé en ce qu'**au matériau en matière plastique présentant des propriétés de barrière sont incorporés jusqu'à 50 %, de préférence jusqu'à 30 %, de façon tout particulièrement préférée jusqu'à 10 % de matériau en matière plastique de base.

7. Film en matière plastique biologiquement dégradable selon l'une quelconque des revendications 1 à 4, **caractérisé en ce que** le matériau en matière plastique de base est mélangé avec une proportion du matériau en matière plastique présentant des propriétés de barrière.

8. Film en matière plastique biologiquement dégradable selon l'une quelconque des revendications 1 à 4 et 7, **caractérisé en ce que** le matériau en matière plastique de base est mélangé avec jusqu'à 50 %, de préférence avec jusqu'à 30 %, de façon tout particulièrement préférée avec jusqu'à 10 % d'un matériau en matière plastique supplémentaire.

9. Film en matière plastique biologiquement dégradable selon l'une quelconque des revendications 1 à 8, **caractérisé en ce que** le matériau en matière plastique présentant des propriétés de barrière est biologiquement dégradable.

10. Film en matière plastique biologiquement dégradable selon l'une quelconque des revendications 1 à 9, **caractérisé en ce que** l'agent d'adhérence est mélangé avec le matériau de base et/ou avec le matériau en matière plastique à propriétés de barrière.

11. Film en matière plastique biologiquement dégradable selon l'une quelconque des revendications 1 à 10, **caractérisé en ce que** le film en matière plastique biologiquement dégradable est mis en forme, de préférence embouti, ou étiré.

12. Film en matière plastique biologiquement dégradable selon l'une quelconque des revendications 1 à 11, **caractérisé en ce que** le film est transparent ou opaque.

13. Procédé pour la fabrication d'un film en matière plastique biologiquement dégradable comportant au moins deux couches de film selon l'une quelconque des revendications 1 à 12, **caractérisé en ce qu'**on extrude une couche de PLA en tant qu'un matériau de base en matière plastique biologiquement dégradable et une couche à propriétés de barrière aux gaz et on insère entre chaque fois deux couches de film un agent d'adhérence à base d'acrylate, en particulier à base de méthacrylate, qui est modifié avec de l'anhydride maléique, l'agent d'adhérence ayant été coextrudé conjointement avec au moins l'une des deux couches de film ou appliqué, de préférence coextrudé, sur l'une des couches de film.

14. Procédé selon la revendication 13, **caractérisé en ce que** le matériau en matière plastique de base PLA a été mélangé avec un matériau en matière plastique supplémentaire présentant des propriétés de barrière, à base de poly(alcool vinylique), de PVOH modifié, d'un alcool vinylique contenant de l'éthylène ou d'un EVOH modifié.

15. Procédé selon la revendication 13 ou 14, **caractérisé en ce que** le matériau en matière plastique à propriétés de barrière a été mélangé avec une proportion du matériau en matière plastique de base.

16. Procédé selon l'une quelconque des revendications 13 à 15, **caractérisé en ce qu'**on utilise comme agent d'adhérence un agent d'adhérence à base d'éthylène-acrylate qui est modifié avec de l'anhydride maléique.

17. Utilisation d'un film en matière plastique biologiquement dégradable selon l'une quelconque des revendications 1 à 12, pour l'emballage de produits alimentaires.
